Europäisches Patentamt

European Patent Office

Office européen des brevets

(11) Publication number: **0 399 965 A2**

# EUROPEAN PATENT APPLICATION

(21) Application number: **90830227.6**

(22) Date of filing: **21.05.90**

(51) Int. Cl.5: **B29C 65/02, B29C 49/00, B65D 81/14**

(30) Priority: **24.05.89 IT 942989**

(43) Date of publication of application:
**28.11.90 Bulletin 90/48**

(84) Designated Contracting States:
**AT BE CH DE ES FR GB LI LU NL SE**

(71) Applicant: **CIARDELLA s.n.c., di Giovanni e Quinto Ciardella Loc. Socciglia**

Borgo a Mozzano (Lucca)(IT)

(72) Inventor: **Ciardella, Quinto Frazione Anchiano Borgo a Mozzano (Lucca)(IT)**

(74) Representative: **Bardini, Marco Luigi et al c/o Società Italiana Brevetti S.p.A. Piazza di Pietra 39 I-00186 Roma(IT)**

(54) **A plastic film encapsulating air bubbles, method of manufacturing same and relevant apparatus.**

(57) The plastic bubble packaging film is manufactured by bonding together two sheets of high density polyethylene (F1, F2) along two sets of joint lines set at right angles to each other and forming a network of sealed envelopes (14) that encapsulate the bubbles. The bond is effected in two successive stages by two pairs of fluted rolls (1a-1b, 7a-7b), one profiled circumferentially, the other axially, between which the sandwiched sheets are caused to pass.

The surfaces of the rolls are heated in order to soften the sheets along the joint lines and enable the bond. On passing through the first pair of rolls, lenghtwise seals are effected so as to form tubular envelopes (13) into which air is blown, whereupon the smaller envelopes (14) are sealed off and the bubbles encapsulated by the transverse action of the second pair of rolls.

Fig. 2

EP 0 399 965 A2

## A plastic film encapsulating air bubbles, method of manufacturing same and relevant apparatus.

The present invention relates to plastic bubble film of the type widely in use as impact-resistant packaging material.

Also disclosed are a method for the manufacture of such a plastic film, in particular from sheets of high density polyethylene, and an apparatus for the implementation of such a method.

Bubble film products currently in widespread use as shock-resistant packaging material are fashioned from low density polyethylene. The manufacturing process starts by raising the temperature of two thin sheets of low density polyethylene approximately up to the melting point and feeding the sheets, paired together, into a rotary press consisting of two rolls of which one is a forming roll fashioned in steel, and the other a pressure roll coated with rubber. The cylindrical surface of the forming roll exhibits a plurality of small holes connected with a negatively pressurized internal gallery in such a way that the polyethylene sheet clinging to the surface is drawn in at each hole and invested with cavities. Passing between the rolls, the two softened sheets bond together as a result of the mechanical pressure exerted by the cylindrical surfaces, and an air bubble is formed in each cavity. Initial preparation of the two thin sheets can be effected by extruding directly from granular polyethylene, or by uncoiling previously extruded bulk sheet from supply rolls: in the first instance, the sheets emerge already softened from the two flat extruding heads and can be fed thus between the press rolls without further heating; in the second, heat must be applied, and is generated in most cases by electric lamps or resistances, or from other suitable radiant sources.

The gauge of low density plastic sheet used in the manufacture of bubble film as outlined above is selected generally from a range of 40-120 $\mu$m; using sheets of 60 $\mu$m and 40 $\mu$m gauge respectively, for example, the finished bubble film will weigh 100g/m$^2$ approx., whilst with two sheets of 120 $\mu$m and 80 $\mu$m respectively, the finished weight of the film will be 200g/m$^2$. Needless to say, the impact resistance of the bubble film fashioned in this way is proportional to the gauge, hence to the weight, of the initial polyethylene sheet material used.

On the practical front, there is the pressing need experienced by wrapping and packaging operators for protective materials with a loading and impact resistance equal to or even greater than that of materials currently available but with a lower weight per unit of surface area, given the ongoing effort to lower the effects of packaging on overall transportation costs.

Whilst it is known that high density polyethylene sheet has considerably greater mechanical strenght than low density polyethylene of similar gauge, high density polyethylene is unsuitable for use with the methods and equipment currently used, as the sheets cannot be kept heated for long enough to enable their bonding together. Similarly, there are other extruding plastics that could be used with advantage in special instances as starting materials for the manufacture of bubble film, notably polypropylene, etc., but neither can these materials be used with the methods and equipment currently in use, substantially for those same reasons aforementioned which make the use of high density polyethylene or equivalent plastics unfeasible.

The object of the present invention is to provide a plastic bubble film suitable for use as packaging material, which affords properties of resistance to impact per unit of weight area significantly higher that possessed by similar materials currently in use.

A further object of the invention is to set forth a method of manufacturing plastic bubble film from high density polyethylene sheet or equivalent plastic material.

It is also an object of the invention to provide an apparatus suitable for the manufacture of plastic bubble film from high density polyethylene sheet or equivalent plastic material.

In the method disclosed, the formation of the bubble envelopes occurs in two steps, with the two sheets of high density polyethylene being bonded together by means of surfaces able to effect a localized softening of the plastic. Moving forward together in a give feed direction, the polyethylene sheets are first bonded one to the other along equispaced joint lines parallel to the feed direction, thereby forming tubular envelopes into which air is blown, whereupon the sheets are sealed along second joint lines disposed normal to the first in such a way as to create sealed envelopes of square or rectangular shape, each of which encapsulates a bubble of air.

It should be observed that, whereas in conventional methods the sheets are heated prior to entering the device which forms the envelopes, it is a feature of the present invention that the sheets are fed to such a device at room temperature and subjected thereafter to a localized radiation of heat only, directed at lines of compression along which the plastic is softened in order to produce a bond. Preferably, the surfaces with which the sheets are subsequently brought into contact, and by which a bond is effected along the joint lines, are fluted and cylindrical, and the areas between which the polyethylene sheets are compressed are the lands that separate one flute from the next.

The bond along the joint lines parallel to the feed direction is effected by a pair of counter-rotating rolls of which the respective cylindrical surfaces afford continuous circumferential flutes, whilst that along the joint lines transverse to the feed direction is effected by a pair of counter-rotating rolls positioned downstream the first pair, of which the cylindrical surfaces are fashioned with axial flutes.

In order to soften the sheets along the joint lines sufficiently for the plastic to bond, the fluted cylindrical surfaces must be kept at a temperature of at least 80°C, and preferably at 120°C or even higher, according to the type of plastic material adopted and/or to the greater or lesser degree of mechanical pressure exerted by the fluted surfaces; the temperature of the fluted surfaces is raised by heat exchange from a hot fluid. Thus, the two sheets are selectively softened and heat-sealed together at the same time.

Injection of air into the tubular envelopes formed initially along the two polyethylene sheets will be effected immediately following the point at which formation effectively occurs, for example, not less than 5 cm from their emergence (depending on the rate of feed). The air is under low pressure, and may be supplied either at room temperature, or preferably, chilled in such a way as to expand as the temperature subsequently rises, thus producing a firmer bubble.

According to the present invention, an apparatus for the manufacture of a plastic bubble film from two sandwiched sheets of high density polyethylene, or equivalent plastic material, is characterized in that it comprises a first pair of opposed heated surfaces affording a plurality of flutes spaced apart one from the next and disposed parallel with the feed direction of the polyethylene sheets, and a second pair of opposed heated surfaces, positioned downstream the first pair in relation to the feed direction of the sheets, affording a plurality of flutes spaced apart one from the next and disposed normal to the feed direction, the first and second pairs of surfaces being able to exert pressure on the sheets passing between them by way of the lands which separate the flutes.

The temperature of the opposed fluted surfaces is such as to occasion a localized softening of the sheets and thus enable their bonding together under the pressure of the lands to create initial tubular envelopes disposed along the feed direction, and thereafter, a regularly ordered formation of sealed envelopes. The apparatus further comprises blowing means by which to fill the tubular envelopes with air that will remain trapped ultimately as bubbles once the sealed envelopes are formed.

The invention will now be described in detail, by way of example, with the aid of the accompanying drawings, in which:

- fig 1 is a schematic side elevational view of the apparatus according to the invention;

- fig 2 is a top plan view of the apparatus of figure 1;

- fig 3 is a cross sectional view through III-III of fig 2.

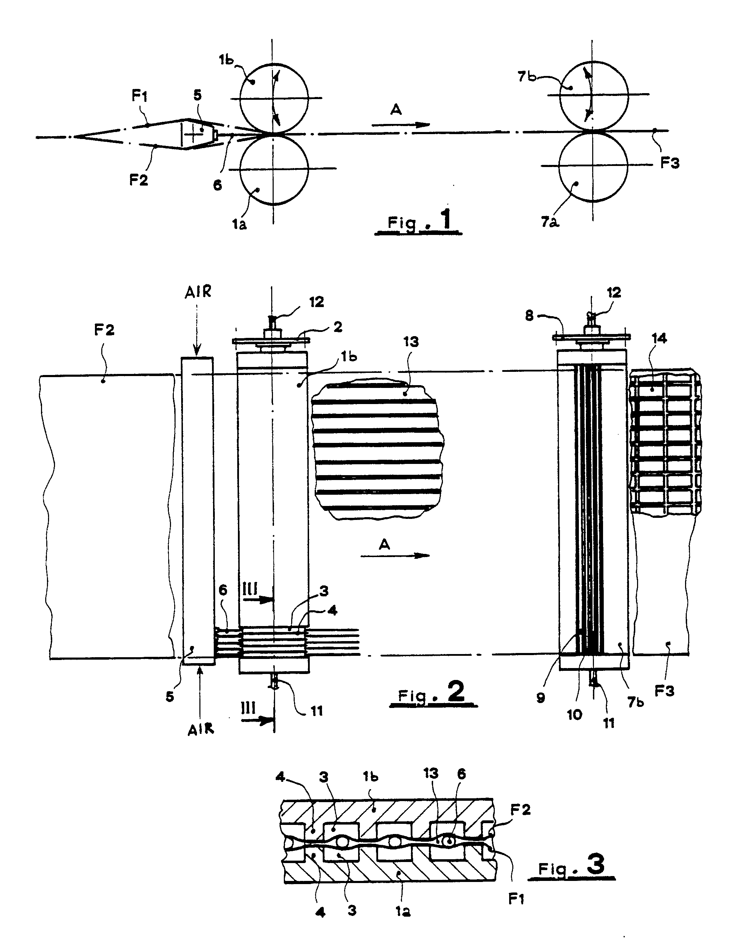

With reference to the drawings, F1 and F2 denote two sheets of high density polyethylene of notably thin gauge uncoiled, for example, from separate supply rolls (not shown) and drawn together in the direction of the arrow denoted A in figs 1 and 2, or alternatively, from a single roll onto which the material is wound initially in tubular format and severed at the moment of uncoiling to create two sheets. The force necessary to draw the sheets forward in the direction of feed will be produced by a conventional power-driven roll (not shown) which also recoils the finished film, denoted F3.

The reference numbers 1a and 1b denote a first pair of rolls positioned with their axes disposed at right angles to the feed direction of the sheets passing between them.

The roll denoted 1a is a driving member, coupled to gears 2, for example, supported rotatably by and occupying a fixed position in relation to the frame (not shown) of the apparatus, whereas the roll denoted 1b is a driven member, and adjustable for position in relation to the driving roll 1a by conventional means to the end of regulating the pressure exerted on the two plastic sheets F1 and F2 passing between them. The cylindrical surface of each roll 1a and 1b is embodied with a plurality of circumferential flutes 3 disposed parallel to the feed direction A and spaced apart regularly one from the next; accordingly, the two rolls enter into contact with the interposed polyethylene sheets by way of the annular lands 4 which separate the flutes 3.

The reference numver 5 denotes a manifold located immediately upstream and parallel to the first pair of rolls 1a and 1b, to the ends of which there is fed air at a pressure slightly higher than atmospheric.

Conseguently, the manifold 5 is disposed transversely to the feed direction A of the sheets F1 and F2, mounted rigidly to the frame (not shown) of the apparatus, and occupies a position toward which the two sheets diverge before converging again and passing together between the rolls 1a and 1b.

A plurality of small bore tubes extending forward from the manifold 5 in the feed direction A.

They are provided in the same number as flutes 3 afforded by the rollers 1a and 1b. The external diameter of tubes 6 is less than the width of the single flute 3, in such a way that each tube 6 can be inserted through the space encompassed by two mating flutes 3 afforded by the opposed rolls 1a and 1b and project a given distance beyond the rolls.

A second pair of rolls 7a and 7b are positioned parallel to the first pair 1a and 1b further along the feed direction A of the sheets F1 and F2.

The roll 7a is a driving member, coupled to gears 8, for example, supported rotatably by and occupying a fixed position in relation to the frame of the apparatus, whereas the roll 7b is driven, and adjustable for position in relation to the driving roll 7a to the end of regulating the pressure exerted on the two plastic sheets F1 and F2 passing between. The cylindrical surface of each second roll 7a and 7b affords a plurality of axial flutes 9, disposed normal to the feed direction A. Accordingly, the rolls 7a and 7b enter into contact with the interposed polyethylene sheets by way of the longitudinal lands 10 which separate the flutes 9.

The two pairs of rolls 1a, 1b and 7a, 7b are iron with a teflon coating, and heated by means of a diathermanous fluid flowing in closed circuit, which is supplied to the interior of the rollers through respective inlets 11 and returned through outlets 12. The surfaces of the four rolls 1a, 1b and 7a, 7b can thus be maintained at a temperature of not less than 120° C or anyway high enough to soften the polyethylene sheets at the areas of contact between the lands 4 and 10 of each pair of rolls, and at the same time to bond the sheets together at these same areas as a result of the mechanical pressure exerted. During their passage through the first pair of rolls 1a and 1b, the sheets will be sealed together along a plurality of joint lines lying parallel to the feed direction, thereby creating a corresponding number of tubular envelopes 13. Passing through the second pair of rolls 7a and 7b, the sheets are sealed a second time along a plurality of joint lines disposed at right angles to the first, which transform the tubular envelopes 13 into a corresponding network of regularly ordered sealed envelopes 14, square or rectangular in shape. Air blown from the tubes 6 into the tubular envelopes 13 immediately beyond the first pair of rolls 1a and 1b will therefore be trapped in the sealed envelopes 14 at the moment of their formation. Using chilled air, moreover, the bubbles of the end product will appear firmer and fuller by virtue of the natural expansion which occurs when the temperature of the air is raised ultimately to ambient.

The tubes 6 are extended beyond the first pair of rolls 1a and 1b into the tubular envelopes 13 for a distance such as ensures that parts already bonded will not separate as a result of the introduction of air; clearly, the distance is dependent upon the feed rate at which the equipment is designed to operate, and will be no less than 5 cm and, preferably, of the order of 15 cm.

By using high density polyethylene as the plastic from which to manufacture bubble film according to the invention, it becomes possible to obtain a marked reduction in unitary weight of the material, resistance to impact being par. For example, high density polyethylene sheet of 6 or 7 um gauge will give a finished bubble film of 15 grams per square metre, which offers an impact resistance comparable to that of a conventional film (i.e. fashioned from low density polyethylene) weighing 130 g/m$^2$.

Besides the advantages deriving from its superior technological properties, the plastic bubble film disclosed also provides a packaging material more pleasing both in appearance and to the touch, and in addition, by virtue of the fact that a lesser quantity of material is effectively required, there are benefits as regards the recovery or destruction of used packaging material.

Plastic bubble film according to the invention can be sandwiched together with other sheet materials such as paper, different plastics etc., as is the practice with conventional bubble film products.

Whilst the specification refers by way of example and expedient to high density polyethylene, which in effect is the preferred material for the type of product in question, there is nothing to prevent other plastic sheet materials from being used in special instances and in applications for which their individual properties may prove advantageous.

Such is the case with polypropylene, barrier materials such as nylon, co-extruded compounds, and other similar materials to which the fundamental concept underlying the present invention can be applied with equally good effect.

Variations and/or modifications may be brought to the method and the apparatus for the production of a plastic film encapsulating air bubbles made of high density polyethylene according to the present invention, without departing from the scope of the invention itself.

## Claims

1. A method of manufacturing plastic bubble film of the type fashioned from two sheets of plastic material encapsulating small pockets of air, characterized in that it comprises the steps of:
- pairing together two sheets of plastic material moving in the same direction;
- utilizing pressure, exerted by surface elements maintained at a temperature sufficient to occasion localized softening of the plastic material, to bond the two sheets together along a plurality of first joint lines lying parallel to the direction of movement and creating a corresponding plurality of tubular envelopes; ·
- blowing air into the tubular envelopes;
- utilizing pressure exerted by further surface elements, maintained at a temperature sufficient to occasion localized softening of the plastic, to bond the two sheets together along second joint lines normal to the direction of movement in such a way that the first and second joint lines intersect to form a plurality of quadrilateral envelopes, each of which being hermetically sealed and encapsulating an air bubble.

2. A method as in claim 1, wherein the pressure utilized to bond the sheets along the joint lines is exerted by pairs of opposed fluted rolls.

3. A method as in claim 2, wherein the fluted rolls are maintained at a surface temperature of not less than 80° C.

4. A method as in preceding claims, wherein the temperature of air blow into the tubular envelopes is room temperature.

5. A method as in claims 1, 2 and 3, wherein the temperature of air blown into the tubular envelopes is lower than room temperature.

6. A method as in preceding claims, wherein the plastic material is high density polyethylene.

7. A method as in claims 1 to 5, wherein the plastic material is selected from polypropylene, barrier material such as nylon, coextruded compounds or their equivalents.

8. Apparatus for the manufacture of a plastic film encapsulating a plurality of air bubbles departing from two sheets of plastic material in movement in the same direction, characterized in that it comprises a first pair of opposed heated surfaces (1a, 1b) affording a plurality of flutes (3) spaced apart one from the next and disposed parallel with the feed direction (A) of the sheets of plastic material (F1, F2), and a second pair of opposed heated surfaces (7a, 7b), positioned downstream the first pair in relation to the feed direction of the sheets, affording a plurality of flutes (9) spaced apart one from the next and disposed normal to the feed direction, said first and second pairs of surfaces being able to exert pressure on the sheets passing between them by way of the lands (4, 10) which separate said flutes, the temperature of the opposed surfaces being such as to occasion a localized softening of the sheets and thus enable their bonding together under the pressure of the lands (4, 10) to create firstly tubular envelopes (13) disposed along the feed direction and, thereafter, a regularly ordered formation of sealed quadrilateral envelopes (14) internally of which air remains encapsulated.

9. Apparatus according to claim 8, wherein the first pair of fluted surfaces comprises two counter-rotating rolls (1a, 1b) rotatable about axes disposed at right angles to the feed direction (A) of the sheets, of which the cylindrical surfaces exhibit a plurality of continuous circumferential flutes (3), and the second pair of fluted surfaces comprises two counter-rotating rolls (7a, 7b) rotatable about axes disposed at right angles to the feed direction of the sheets, of which the cylindrical surfaces exhibit a plurality of axial flutes (9).

10. Apparatus according to claims 8 and 9, wherein the temperature of the rolls is raised by heat exchange with an internally circulated hot fluid.

11. Apparatus according to any of the claim 8, 9, 10 comprising means for blowing air into the tubular envelopes (13), comprising an air manifold (5) positioned preceding the first pair of rolls (1a, 1b) and between the two sheets of plastic material, and a plurality of tubes (6), each projecting radially from the manifold through the space encompassed by two corresponding flutes (3) of the first pair of rolls (1a, 1b), and emerging beyond the rolls internally of a corresponding tubular envelope.

12. Apparatus according to the preceding claims, wherein the plastic material is high density polyethylene.

13. Apparatus according to the claims 8, 9, 10 and 11 wherein the plastic material is selected from polypropylene, barrier materials such as nylon, coextruded compounds or their equivalents.

14. A plastic film material encapsulating air bubbles, characterized in that the material is high density polyethylene.

15. A plastic film material according to claim 14, consisting in two sheets of high density polyethylene bonded together along a plurality of joint lines disposed parallel and at right angles to one another and creating sealed envelopes of quadrilateral shape each of which encapsulates a bubble of air.

16. A plastic film material encapsulating air bubbles, characterized in that the material is selected from polypropylene, barrier materials such as nylon, coextruded compounds or their equivalents.

Fig. 1

Fig. 2

Fig. 3